# EUROPEAN PATENT SPECIFICATION

(11) **EP 1 948 498 B1**
(45) Date of publication and mention of the grant of the patent: **28.07.2010**
(21) Application number: 06812984.0
(22) Date of filing: 06.11.2006
(51) Int. Cl.: B62D 53/08

(54) **A TRACTOR ADAPTED TO BE CONNECTED TO A SEMI-TRAILER**
ZUR VERBINDUNG MIT EINEM SATTELSCHLEPPER AUSGEFÜHRTER TRAKTOR
TRACTEUR ADAPTE POUR ETRE ACCOUPLE A UNE SEMI-REMORQUE

(30) Priority: 07.11.2005 SE 0502459
(43) Date of publication of application: 30.07.2008
(73) Proprietor: Volvo Lastvagnar AB, 405 08 Göteborg (SE)
(72) Inventor: GUSTAFSSON, Jens, 431 36 Mölndal (SE); VIKSTRÖM, Tobias, S-443 38 Lerum (SE); LENNARTSSON, Mikael, S-442 98 Kode (SE)
(74) Representative: Fröhling, Werner Otto
(86) International application number: PCT/SE2006/001261
(87) International publication number: WO 2007/053099

(56) References cited:
- DE-C1- 10 223 612
- GB-A- 2 037 684
- US-A- 2 066 430
- US-A- 2 894 764
- US-A- 3 810 663

## Description

The present invention relates to a tractor adapted to be connected to a semi-trailer and comprising a chassis, at least one front wheel axle at the front portion and at least one rear wheel axle at the rear portion of the chassis, a cab at the front portion and a fifth wheel at the rear portion, the fifth wheel having means to connect the truck to the king pin of a semi-trailer.

Previously known tractors of the type described above usually have a chassis comprising two longitudinal frame beams which have rear end portions sloping backwards. The height of the rear edge of these frame beams are adapted to the lower edge of the front end of that type of semi-trailers which the tractor is design for so that a portion of this sloping end portion, when the tractor is driven in reverse towards the semi-trailer, can be moved in under the trailer before the front edge of the trailer contacts the beams. When the tractor continues to move in reverse the front edge of the trailer will slide on the sloping surface of the end portion at the same time as the trailer will be raised until finally the king pin on the trailer enters an opening in the fifth wheel on the tractor.

Document GB 2037684A describes such a tractor.

When the tractor is driven with a semi-trailer connected to it a certain vertical angle movement of the trailer relative to the tractor has to be allowed to compensate for uneven road surfaces, sloping ferry ramps etc. The maximum angle allowed is determined on the length of the overhang of the tractor chassis, the angel of the sloping end portion of the chassis and the height of the fifth wheel above the ground.

Generally, semi-trailers are designed to carry as much payload as possible. However, there are certain criteria which set the limits in this respect. The maximum height of the trailer is limited by the height of tunnels and underpasses.

The required minimum vertical angle movement of the trailer relative to the tractor sets the limit for the minimum ground clearance which in turn is determined by the height of the fifth wheel and the sloping pick up ramp constituted by the sloping rear end portion of the tractor chassis beams.

One purpose of the present invention is to obtain a tractor described by way of introduction which can have a lower chassis and a lower fifth wheel than previously known tractors and still allow enough vertical angle movement of the trailer relative to the tractor.

This is obtained according to the present invention by means of a tractor having pick up means mounted at or near the rear end of the chassis, said pick up means being moveable between an upper and a lower position and arranged, when the tractor is moving in reverse and the rear end of the chassis is moving in under the semi-trailer, to catch means on the semi-trailer and, caused by continued movement of the tractor in reverse, to lift the front end of the semi-trailer and to guide the king pin of the semi-trailer to a predetermined position in relation to the fifth wheel.

During driving with the pick up means in its lower position out of the way there are no obstructions behind the fifth wheel other than the overhang which, since it does not have to serve as a pick up arrangement, can be made lower than what has been previously possible.

In a preferred embodiment of the present invention the pick up means is a ramp pivotally journalled on the chassis. Power operated means connect the ramp with the chassis and are arranged, when operated, to tilt the ramp between an upper pick up position, in which a front end of the ramp levels with the fifth wheel and a rear end of the ramp is situated at a lower level adapted to the lower level of the semi-trailer to be connected, and a storage and driving position, in which the complete ramp is lying at a level below the fifth wheel.

This embodiment is particularly advantageous because the pick up ramp can serve as a protection shield over the rear overhang of the chassis and thereby enable the use of this space as a compartment for fragile equipment such as batteries, pneumatic tanks and the like.

The invention will be described in more detail below with reference the accompanying drawings, wherein
Fig. 1 shows a side view of a preferred embodiment of a tractor according to the present invention connected to a semi-trailer,
Fig. 2 shows a perspective view of the rear portion of a pair of chassis beams and a and a pick up frame according to a preferred embodiment of the invention with the pick up frame in a lower storage position,
Fig. 3 shows a view corresponding to Fig. 2 with the pick up frame in an upper pick up position
Fig. 4 shows a perspective view of a pick up frame module and
Fig. 5 shows a block diagram of an equipment for adjusting the pivot angle of the pick up frame.

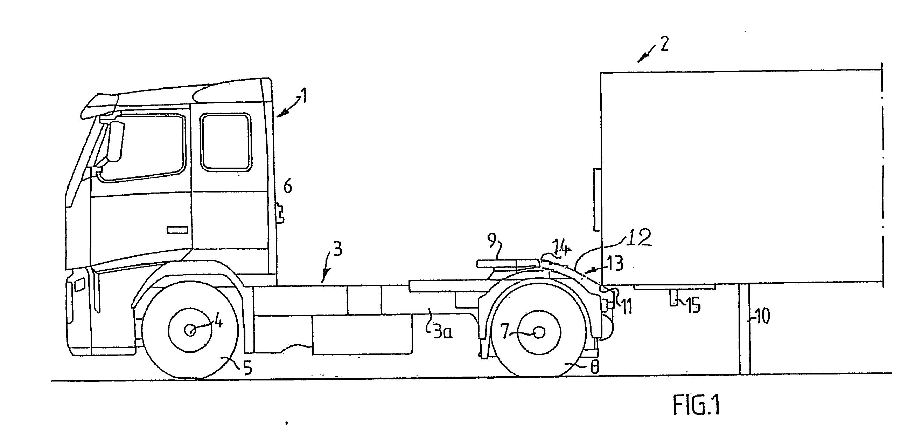

In Fig.1 a tractor is generally designated 1 and a semi-trailer is generally designated 2. The tractor 1 has a chassis 3 which comprises two chassis beams 3a. The chassis 2 carries at a front portion a front wheel axle 4 with front wheels 5 and a cab 6 and at a rear portion a rear wheel axle 7 with rear wheels 8. Also in the rear portion a fifth wheel 9 is mounted.

Only a front portion of the semi-trailer 2 is shown which front portion is resting on support legs 10 prior to pick up by the tractor. In Fig. 1 the tractor has been driven in reverse to a position in which a lower front edge 11 of the semi- trailer just touches an upper surface 12 of a sloping pick up ramp, generally designated 13, on the tractor. As can be seen in Fig. 1 the pick up ramp 13 is adjusted to an upper pick up position wherein the upper edge 14 of the pick up ramp 13 levels with the upper surface of the fifth wheel 9. Starting from the position shown in Fig. 1, continued movement of the tractor 1 in reverse will result in sliding movement of the lower front edge 11 of the of the semi-trailer 2 on the sloping surface 12 of the pick up ramp 13 until a king pin 15 mounted on the underside of the semi-trailer 2 eventually is guided into and locked in an opening in the fifth wheel 9.

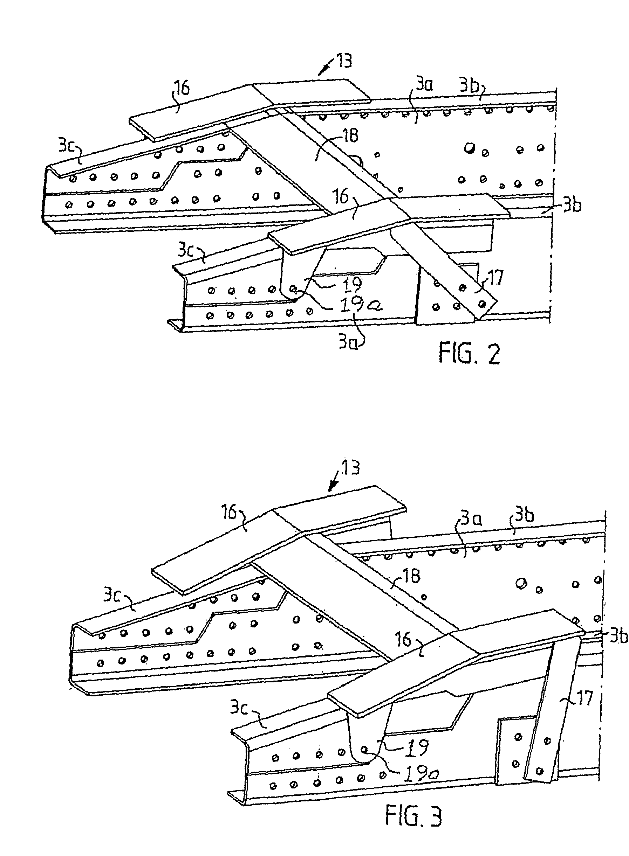

After the king pin 15 has been locked in the opening of the fifth wheel 9 and before driving away the pick up frame 13 is lowered to its storage and driving position (Fig. 2). When the tractor 1 has been brought to a stop and the trailer 2 is to be disconnected from the tractor 1 the above described sequence is reversed, i. e. the pick up ramp is again raised to its pick up position, the king pin 15 is disconnected from the fifth wheel 9 and the tractor is driven in the forward direction which will result in backwards sliding movement of the front edge 11 of the trailer 2 on the sloping surface of the pick up ramp 13. In this manner the tractor chassis 3 and the rear wheel suspension of the chassis will be successively unloaded from the weight of the trailer. This operation is particularly advantageous if the tractor has an air suspension because it prevents the air cushions of the suspension from suddenly raising the chassis when unloaded.

In Fig. 2 and Fig. 3 an enlargement of the pick up ramp 13 on the tractor 1 in Fig. 1 is shown in its storage and driving position and in its pick up position, respectively. The ramp 13 comprises two beams 16 which are interconnected by a cross beam 18. The beams 16 are at their rear ends connected to brackets 19 with bores 19a for pivotal mounting on the chassis beams 3a and are shaped to conform with the upper horizontal surface 3b and the inclined surface 3c of the chassis beams 3. A pair of power operated rods 17 are at one end pivotally mounted on the chassis beams 3a and contact at the other end the underside of the ramp beams 16.

The rods 17 are operated by power means (not shown), e. g. hydraulic or pneumatic piston-cylinder devices. By means of the rods 16 the ramp 13 can be tilted between a low storage and driving position (Fig. 2) resting on the chassis beams 3a and a raised pick up position (Fig. 3) in which the ends of the beams 16 are lying at the level of the upper surface of fifth wheel 9.

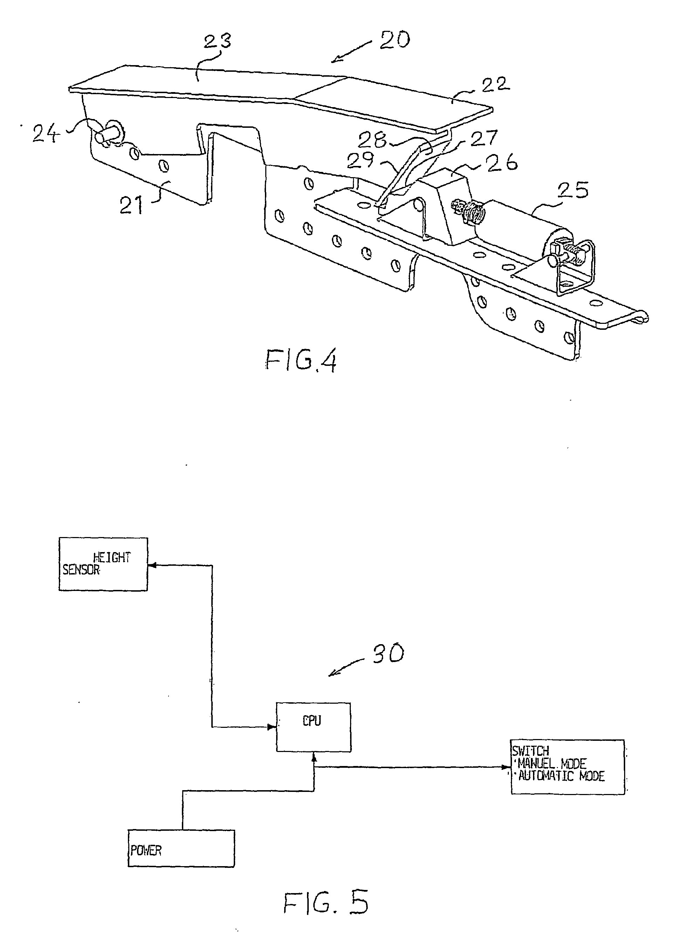

Fig. 4 shows an embodiment of a pick up frame module 20 which together with a second frame module (not shown) being a mirror image of the shown module 20 makes up a complete pick up frame. These frame modules can be bolted or welded to tractor chassis beams 3a which, because of the configuration of the frame modules 20, need not require a horizontal flange corresponding with the chassis beam flanges 3b, 3c.

Each frame module 20 comprises a support beam 21 and a slide beam 22 with a slide surface 23 pivotally journalled on the support beam 21 by means of a pivot pin 24. Pivotal movement is achieved by an electrically operated screw and nut device 25 connected to a sliding block 26 having an edge surface 27 contacting an inclined surface 28 of a flange 29 on the beam 22. When the screw and nut device 25 is operated it will horizontally displace the sliding block 26 thereby varying the angle of inclination of the slide beam 22 relative to the support beam 21.

In order to adapt the above described pick up frame arrangement to various tractors having fifths wheels with upper surfaces, the height over the ground of which differs between them, the pick up frame 13, 20 can be controlled by an operating equipment 30 (Fig. 5) which senses the height of the upper surface of the fifth wheel 9 and adjusts the upper position of the pick up frame 13 so that its upper edge 14 levels with the upper surface of the fifth wheel. As a sensor an ultra-sonic or infra red sensor can be used which is preferably located on the rear wall of the tractor and senses the height of the upper surface of the fifth wheel 9. The adjustment can be either manually or automatically controlled, as indicated in the diagram in Fig. 5.

## Claims

1. A tractor (1) adapted to be connected to a semi-trailer (2) and comprising a chassis (3), at least one front wheel axle (4) at the front portion and at least one rear wheel axle (7) at the rear portion of the chassis, a cab (6) at the front portion and a fifth wheel (9) at the rear portion of the chassis, the fifth wheel having means to connect the truck to a king pin (15) of a semi-trailer, with pick up means (13) comprising a pick up ramp being mounted on the chassis (3) at or near the rear end of the chassis, said pick up means being moveable between an upper and a lower position and arranged, when the tractor (1) is moving in reverse and the rear end of the chassis is moving in under the semi-trailer (2), to catch means (11) on the semi-trailer and, caused by continued movement of the tractor in reverse, to lift the front end of the semi-trailer and to guide the king pin (15) of the of the semi-trailer to a predetermined position in relation to the fifth wheel (9), said tractor being **characterized in that** the pick up ramp (13) is controlled by an operating equipment equipped with sensor means sensing the height of the upper surface of the fifth wheel (9), the tractor further comprising means to adjust the upper position of the pick up ramp (13) so that its upper edge (14) levels with the upper surface of the fifth wheel.

2. A tractor according to claim 1, **characterized in that** said pick up means is a ramp (13) pivotally journalled on the chassis (3) and that power operated means (17) connect the ramp with the chassis, said power operated means being arranged, when operated, to tilt the ramp between an upper pick up position, in which a front end (14) of the ramp levels with the fifth wheel (9) and a rear end of the ramp is situated at a lower level adapted to the level of the semi-trailer to be connected, and a storage and driving position, in which the complete ramp is lying at a level below the fifth wheel.

3. A tractor according to claim 2, **characterized in that** the pick up ramp (13) comprises two longitudinal beams (16), each one being pivotally connected at or near one end to a beam (3a) of the chassis and at or near the other end to power operated means (17).

4. A tractor according to claim 3, **characterized in that** said longitudinal beams (16) are interconnected by at least one transverse cross-beam (18).

5. A tractor according one of claims 1-4, **characterized in that** the pick up ramp (13) comprises two pick up frame modules (20) being mirror images of one another, each module comprising a support beam (21) adapted to be rigidly attached to a tractor chassis beam (3a), a slide beam (21) pivotally journalled on the support beam and power operated means (25) for varying the inclination of the slide beam relative to the support beam.

## Patentansprüche

1. Zugfahrzeug (1), das für eine Verbindung mit einem Sattelanhänger (2) angepasst ist und ein Chassis (3), wenigstens eine Vorderradachse (4) an dem vorderen Abschnitt und wenigstens eine Hinterradachse (7) an dem hinteren Abschnitt des Chassis, eine Kabine (6) an dem vorderen Abschnitt und ein fünftes Rad (9) an dem hinteren Abschnitt des Chassis umfasst, wobei das fünfte Rad Einrichtungen zur Verbindung des Lastwagens mit einem Sattelzapfen (15) eines Sattelanhängers aufweist, wobei eine Aufnahmeeinrichtung (13) mit einer Aufnahmerampe an dem Chassis (3) am oder in der Nähe des hinteren Endes des Chassis angebracht sind, wobei die Aufnahmeeinrichtung zwischen einer oberen und einer unteren Position bewegbar ist und so ausgebildet ist, dass sie, wenn sich der Traktor (1) rückwärts bewegt und das hintere Ende des Chassis sich unter den Sattelanhänger (2) bewegt, eine Einrichtung (11) an dem Sattelanhänger fängt und, verursacht durch eine fortlaufende Rückwärtsbewegung des Zugfahrzeugs, das vordere Ende des Sattelanhängers anhebt und den Sattelzapfen (15) des Sattelanhängers zu einer vorherbestimmten Position bezüglich des fünften Rades (9) führt, wobei das Zugfahrzeug **dadurch gekennzeichnet ist, dass** die Aufnahmerampe (13) von einer Betätigungseinrichtung gesteuert wird, die mit einer Sensoreinrichtung ausgestattet ist, die die Höhe der oberen Oberfläche des fünften Rades (9) erfasst, wobei das Zugfahrzeug außerdem eine Einrichtung umfasst, die die obere Position der Aufnahmerampe (13) so einstellt, dass ihre obere Kante (14) auf Höhe der oberen Oberfläche des fünften Rades liegt.

2. Zugfahrzeug nach Anspruch 1, **dadurch gekennzeichnet, dass** die Aufnahmeeinrichtung eine schwenkbar an dem Chassis (3) gelagerte Rampe (13) ist und dass eine kraftbetriebene Einrichtung (17) die Rampe mit dem Chassis verbindet, wobei die kraftbetriebene Einrichtung so ausgebildet ist, dass sie bei Betätigung die Rampe zwischen einer oberen Aufnahmeposition, in der ein vorderes Ende (14) der Rampe auf Höhe des fünften Rades (9) liegt und ein hinteres Ende der Rampe auf einer unteren Höhe liegt, die an die Höhe des zu verbindenden Sattelanhängers angepasst ist, und einer Speicher- und Fahrposition kippbar ist, in der die vollständige Rampe auf einer Höhe unterhalb des fünften Rades liegt.

3. Zugfahrzeug nach Anspruch 2, **dadurch gekennzeichnet, dass** die Aufnahmerampe (13) zwei Längsträger (16) aufweist, die jeweils schwenkbar am oder in der Nähe eines Trägers (3a) des Chassis und am oder in der Nähe des anderen Endes der kraftbetriebenen Einrichtung (17) verbunden sind.

4. Zugfahrzeug nach Anspruch 3, **dadurch gekennzeichnet, dass** die Längsträger (16) miteinander durch wenigstens einen quer verlaufenden Querträger (18) verbunden sind.

5. Zugfahrzeug nach einem der Ansprüche 1 bis 4, **dadurch gekennzeichnet, dass** die Aufnahmerampe (13) zwei Aufnahmerahmenmodule (20) umfasst, die zueinander Spiegelbilder sind, wobei jedes Modul einen Stützträger (21), der für eine feste Anbringung an einem Zugfahrzeug-Chassisträger (3a) angepasst ist, einen Gleitträger (21), der schwenkbar an dem Stützträger angelenkt ist, und eine kraftbetriebene Einrichtung (25) zur Veränderung der Neigung des Gleitträgers bezüglich des Stützträgers umfasst.

## Revendications

1. Tracteur (1) adapté pour être relié à une semi-remorque (2), et comprenant un châssis (3), au moins un essieu de roue avant (4) au niveau de la partie avant, et au moins un essieu de roue arrière (7) au niveau de la parti arrière du châssis, une cabine (6) au niveau de la partie avant et une sellette d'attelage (9) au niveau de la partie arrière du châssis, la sellette d'attelage ayant des moyens pour connecter le camion à un pivot d'attelage (15) d'une semi-remorque, avec des moyens d'accrochage (13) comprenant une rampe d'accrochage étant montés sur le châssis (3) au niveau ou à proximité de l'extrémité arrière du châssis, lesdits moyens d'accrochage étant mobiles entre une position supérieure et une position inférieure et étant agencés, lorsque le tracteur (1) se déplace en marche arrière et l'extrémité arrière du châssis se déplace sous la semi-remorque (2), pour saisir des moyens (11) situés sur la semi-remorque et, au moyen d'un déplacement continu du tracteur en marche arrière, pour lever l'extrémité avant de la semi-remorque et guider le pivot d'attelage (15) de la semi-remorque vers une position prédéterminée par rapport à la sellette d'attelage (9), ledit tracteur étant **caractérisé en ce que** la rampe d'accrochage (13) est commandée par un équipement d'actionnement muni de moyens formant capteur détectant la hauteur de la surface supérieure de la sellette d'attelage (9), le tracteur comprenant en outre des moyens pour ajuster la position supérieure de la rampe d'accrochage (13) de sorte que son bord supérieur (14) soit mis à niveau avec la surface supérieure de la sellette d'attelage.

2. Tracteur selon la revendication 1, **caractérisé en ce que** lesdits moyens d'accrochage sont constitués d'une rampe (13) tourillonnée de manière pivotante sur le châssis (3), et **en ce que** les moyens mécanisés (17) connectent la rampe au châssis, lesdits moyens mécanisés étant agencés, lorsqu'ils sont actionnés, pour incliner la rampe entre une position d'accrochage supérieure, dans laquelle une extrémité avant (14) de la rampe est à niveau avec la sellette d'attelage (9) et une extrémité arrière de la rampe est située à un niveau inférieur adaptée au niveau de la semi-remorque pour connexion, et une position de stockage et de conduite, dans laquelle la rampe complète est disposée à un niveau situé sous la sellette d'attelage.

3. Tracteur selon la revendication 2, **caractérisé en ce que** la rampe accrochage (13) comporte deux poutres longitudinales (16), chacune étant connectée de manière pivotante au niveau de ou à proximité d'une extrémité de la poutre (3a) du châssis, et au niveau de ou à proximité de l'autre extrémité de moyens mécanisés (17).

4. Tracteur selon la revendication 3, **caractérisé en ce que** lesdites poutres longitudinales (16) sont interconnectées par au moins une poutre transversale (18).

5. Tracteur selon l'une quelconque des revendications 1 à 4, **caractérisé en ce que** la rampe accrochage (13) comprend deux modules de châssis d'accrochage (20) étant des images miroirs l'un de l'autre, chaque module comprenant une poutre de support (21) adaptée pour être fixée de manière rigide sur une poutre de châssis de tracteur (3), une poutre coulissante (21) tourillonnée de manière pivotante sur la poutre de support, et des moyens mécanisés (25) pour modifier l'inclinaison de la poutre coulissante par rapport à la poutre de support.
